# EUROPEAN PATENT APPLICATION

(11) **EP 4 819 731 A1**
(43) Date of publication of application: **07.10.2026**
(21) Application number: 24895891.0
(22) Date of filing: 10.09.2024
(51) Int. Cl.: H04W 72/20

(54) **DATA RECEIVING METHOD, DATA SENDING METHOD, COMMUNICATION APPARATUS AND STORAGE MEDIUM**

(30) Priority: 01.12.2023 CN 202311655951
(71) Applicant: ZTE Corporation, Shenzhen, Guangdong 518057 (CN)
(72) Inventor: LI, Yong, Shenzhen, Guangdong 518057 (CN); LU, Zhaohua, Shenzhen, Guangdong 518057 (CN); WANG, Jianwei, Shenzhen, Guangdong 518057 (CN); LI, Lun, Shenzhen, Guangdong 518057 (CN); XIAO, Huahua, Shenzhen, Guangdong 518057 (CN); LIU, Wenfeng, Shenzhen, Guangdong 518057 (CN); WEI, Xingguang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/118052
(87) International publication number: WO 2025/112792

(57) **Abstract**

Provided are a data receiving method, a data sending method, and a communication apparatus and a storage medium. The data receiving method comprises: receiving first signaling sent by a second communication node, wherein the first signaling is used for indicating a data transmission scheme, and the data transmission scheme comprises a coding scheme and/or a modulation scheme; and on the basis of the data transmission scheme indicated by the first signaling, receiving data sent by the second communication node.

## Description

The present disclosure claims priority to Chinese Patent Application with application No. 202311655951.8, filed on December 1, 2023. The entire content of the Chinese Patent Application is incorporated herein by reference.

### TECHNICAL FIELD

The present disclosure relates to the field of communication technologies, and in particular, to a data receiving method, a data sending method, a communication apparatus, and a storage medium.

### BACKGROUND

A wireless communication system is widely used in people's daily life and production. For example, the wireless communication system is applied to video transmission, voice transmission, positioning, machine-to-machine communication (M2M) in an industrial field, device-to-device (D2D) communication, and communication between a vehicle and other devices in vehicle-to-everything (V2X). More and wider applications also put forward increasingly higher requirements on performance of data transmission of wireless communication technologies, such as data transmission efficiency and reliability.

### SUMMARY

In a first aspect, an embodiment of the present disclosure provides a data receiving method. The data receiving method includes:
receiving a first signaling sent from a second communication node, where the first signaling is used to indicate a data transmission scheme, and the data transmission scheme includes a coding scheme and/or a modulation scheme; and
receiving, according to the data transmission scheme indicated by the first signaling, data sent from the second communication node.

In a second aspect, an embodiment of the present disclosure provides a data sending method. The data sending method includes:
sending a first signaling to a first communication node, where the first signaling is used to indicate a data transmission scheme, and the data transmission scheme includes a coding scheme and/or a modulation scheme; and
sending, according to the data transmission scheme indicated by the first signaling, data to the first communication node.

In a third aspect, an embodiment of the present disclosure provides a communication apparatus. The communication apparatus includes: a first receiving module and a second receiving module;
the first receiving module is configured to receive a first signaling sent from a second communication node, where the first signaling is used to indicate a data transmission scheme, and the data transmission scheme includes a coding scheme and/or a modulation scheme; and
the second receiving module is configured to receive, according to the data transmission scheme indicated by the first signaling, data sent from the second communication node.

In a fourth aspect, an embodiment of the present disclosure provides another communication apparatus. The communication apparatus includes: a first sending module and a second sending module;
the first sending module is configured to send a first signaling to a first communication node, where the first signaling is used to indicate a data transmission scheme, and the data transmission scheme includes a coding scheme and/or a modulation scheme; and
the second sending module is configured to send, according to the data transmission scheme indicated by the first signaling, data to the first communication node.

In a fifth aspect, an embodiment of the present disclosure further provides a communication apparatus. The communication apparatus includes: a memory and a processor; the memory and the processor are coupled to each other; the memory is configured to store instructions executable by the processor; the processor, upon executing the instructions, executes any method provided according to the first aspect or the second aspect.

In a sixth aspect, an embodiment of the present disclosure provides a computer program product containing computer instructions, the computer instructions, upon being run on a computer, enable the computer to execute any method provided according to the first aspect or the second aspect.

### BRIEF DESCRIPTION OF THE DRAWINGS

The drawings are used to provide a further understanding of the technical solution of the present disclosure, and constitute a part of the specification. The drawings, together with the embodiments of the present disclosure, is used to interpret the technical solution of the present disclosure, and do not constitute a limitation on the technical solution of the present disclosure.
FIG. 1 is a schematic diagram of an architecture of a communication system according to some embodiments.
FIG. 2 is a flow schematic diagram of a data receiving method according to some embodiments.
FIG. 3 is a flow schematic diagram of a data sending method according to some embodiments.
FIG. 4 is a schematic diagram of a composition of a communication apparatus according to some embodiments.
FIG. 5 is a schematic diagram of a composition of another communication apparatus according to some embodiments.
FIG. 6 is a structural schematic diagram of a communication apparatus according to some embodiments.

### DETAILED DESCRIPTION

The technical solutions in the embodiments of the present disclosure will be described clearly and completely below with reference to the accompanying drawings in the embodiments of the present disclosure. However, the described embodiments are only some embodiments of the present disclosure, rather than all the embodiments. Based on the embodiments in the present disclosure, all other embodiments obtained by a person of ordinary skill in the art without making any creative effort belong to the protection scope of the present disclosure.

In the description of the present disclosure, unless otherwise specified, "/" means "or", for example, A/B may represent A or B. "And/or" herein is only a relationship describing associated objects, indicating that three relationships may exist. For example, A and/or B may indicate: only A, only B, and A and B. Furthermore, "at least one" means one or more, and "multiple/plurality of" means two or more. Expressions such as "first", "second", etc. do not limit the number and execution order, and expressions such as "first", "second", etc. also do not limit the defined objects must be different from each other.

It should be noted that in the present disclosure, expressions such as "exemplarily" or "for example" are used to serve as examples, illustrations, or descriptions. Any embodiment or design solution described as "exemplarily" or "for example" in the present disclosure should not be interpreted as being more preferred or more advantageous than other embodiments or design solutions. To be specific, the usage of expressions such as "exemplarily" or "for example" is intended to present related concepts in a detailed manner.

In wireless communication technologies, such as long term evolution (LTE) technology, new radio (NR) technology, etc., orthogonal frequency division multiplexing (OFDM) technology is used for multi-carrier modulation, which may effectively combat frequency selective fading, overcome inter-symbol interference (ISI), and thus achieve high-speed data transmission. In OFDM technology, a smallest frequency domain unit is a subcarrier, and a smallest time domain unit is an OFDM symbol. To facilitate the usage of frequency domain resources, a resource block (RB) is defined, where a resource block includes a specific number of consecutive subcarriers. A bandwidth part (BWP) is also defined, where a bandwidth part includes a specific number of consecutive resource blocks on a carrier. Furthermore, to facilitate the usage of time domain resources, a slot is defined, where a slot includes a specific number of consecutive OFDM symbols.

Currently, increasingly higher requirements are imposed on performance of data transmission in wireless communication technologies, such as data transmission efficiency and reliability, etc. In a wireless communication system, a sending end may map a bit block of a transport channel to a bit block of a physical channel, and modulate the bit block of the physical channel into a complex-valued symbol block, thereby transmitting symbols of the complex-valued symbol block via an antenna port. Correspondingly, a receiving end receives data.

Exemplarily, a bit block of a transport channel is mapped to a bit block of a physical channel, the bit block of the physical channel is modulated into a complex-valued symbol block, and then symbols in the complex-valued symbol block are mapped onto one or more layers, thereby generating a symbol block of a layer or symbol blocks of a plurality of layers. A layer refers to a layer in multiple-antenna spatial division multiplexing used for transmitting data, and symbols on different layers are transmitted via different antenna ports. A bit block of a transport channel may be composed of one or more bits of the transport channel, for example, the bit block of the transport channel is a bit string of the transport channel. A bit block of a physical channel is composed of one or more bits of the physical channel, for example, the bit block of the physical channel is a bit string of the physical channel. A modulated symbol block is composed of one or more symbols, for example, a symbol string. A symbol block of a layer is composed of one or more symbols (e.g., a symbol string).

A bit block of a transport channel is also referred to as a transport block in transmission. Different transport blocks may come from different transmission tasks, and different transmission tasks have different transmission quality of service requirements. Therefore, different transport blocks may correspond to different transmission quality of service requirements. In transmitting data using multiple antennas in a spatial division multiplexing manner, one or more layers may be used to transmit data to improve the efficiency of data transmission. Channel states of different layers are different from each other. For example, energies of signals received on respective layers are different, interferences suffered by respective layers are different, and channel qualities of respective layers are different; variations of channel states of respective layers in frequency domain are different, and variations of the channel states of respective layers in time domain are different.

However, a current method of indicating a data transmission strategy generally makes the data transmission strategy not match the channel state of each layer, which may result in a decrease in a performance of data transmission, such as a decrease in an efficiency of data transmission, or a decrease in an accuracy of data transmission. Therefore, how to design a data transmission method to adapt a transmission strategy to a wireless channel state and improve the performance of data transmission is an urgent problem to be solved in some technologies.

In view of this, the present disclosure provides a data receiving method. The method includes that: a first communication node receives a first signaling sent from a second communication node, where the first signaling is used to indicate a data transmission scheme; and the data transmission scheme includes a coding scheme and/or a modulation scheme; the first communication node receives data sent from the second communication node according to the data transmission scheme indicated by the first signaling. In this way, the data transmission scheme adopted for data transmission may be made more adapted to the channel state, thereby improving a data transmission performance of a communication system.

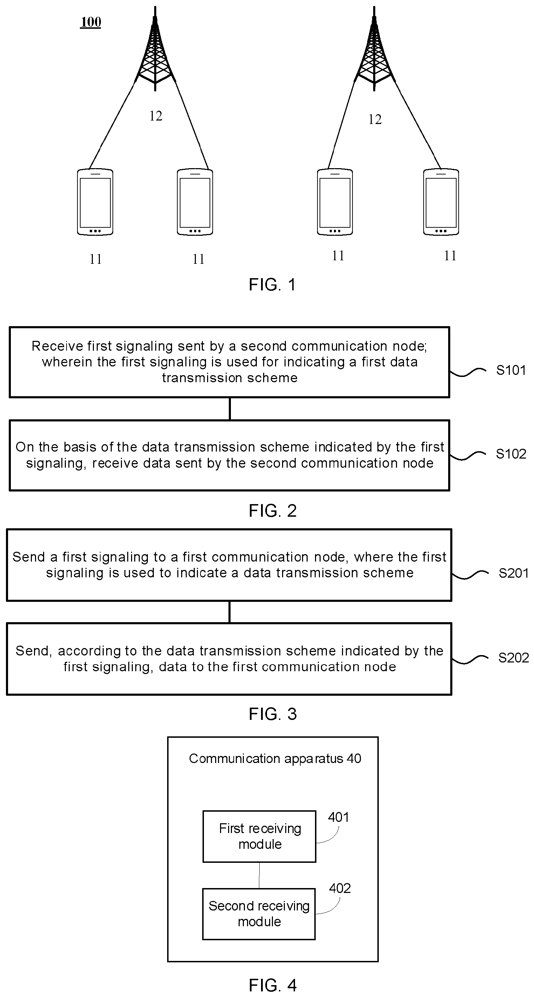

The method provided by the embodiments of the present disclosure may be applied to various communication systems, for example, the communication system may be a long term evolution system, a fifth generation (5G) communication system, a wireless fidelity (Wi-Fi) system, a communication system related to a third generation partnership project (3GPP), a future evolved communication system (e.g., a sixth generation (6G) communication system, etc.), or a system integrating multiple systems, which is not limited thereto. The method provided by the embodiments of the present disclosure will be described below by taking the communication system 100 shown in FIG. 1 as an example. FIG. 1 is only a schematic diagram, and does not constitute a limitation on the applicable scenarios of the technical solutions provided by the present disclosure.

FIG. 1 is a schematic diagram of an architecture of a communication system provided by the embodiments of the present disclosure. As shown in FIG. 1, the communication system 100 may include one or more first communication nodes 11 and one or more second communication nodes 12. The second communication node 12 may be in communication connection with one or more first communication nodes 11.

In some embodiments, in the communication system 100, the first communication node and the second communication node are communicated with each other via a wireless channel. For example, the first communication node is a terminal device, the second communication node is a network device, and the network device is communicated with the terminal device via a wireless channel. For another example, the first communication node is a terminal device, the second communication node is a wireless router, and the wireless router is communicated with the terminal device via a wireless channel.

The network device may be used to implement functions such as resource scheduling, radio resource management, and radio access control of the terminal device. For example, the network device may be an evolutional nodeB (Evolution nodeB, eNB), a next generation nodeB (gNB), a transmission receive point (TRP), a transmission point (TP), or some other access nodes. According to a size of a service coverage area provided, base stations may be further classified into a macro base station for providing a macro cell, a pico base station for providing a pico cell, and a femto base station for providing a femto cell. With the continuous evolution of wireless communication technologies, future base stations may also adopt other names.

A terminal device may also be referred to as a terminal, user equipment (UE), a mobile station, a mobile terminal, etc. Exemplarily, the terminal device may be a mobile phone, a tablet computer, a computer with a wireless transceiving function, a virtual reality terminal, an augmented reality terminal, a wireless terminal in industrial control, a wireless terminal in self driving, a wireless terminal in remote surgery, a wireless terminal in transportation safety, a wireless terminal in smart city, a wireless terminal in smart home, etc. The embodiments of the present disclosure do not limit the device form adopted by the terminal.

Exemplarily, the first communication node is a first base station, the second communication node is a second base station, and the first base station is communicated with the second base station via a wireless channel. For another example, the first communication node is a first terminal, the second communication node is a second terminal, and the first terminal is communicated with the second terminal via a wireless channel. For another example, the first communication node is a relay, the second communication node is a base station, and the base station is communicated with the relay via a wireless channel. For another example, the first communication node is a terminal, the second communication node is a relay, and the relay is communicated with the terminal via a wireless channel. For another example, the first communication node is a first relay, the second communication node is a second relay, and the first relay is communicated with the second relay via a wireless channel. For another example, the first communication node is a base station, the second communication node is a satellite, and the satellite is communicated with the base station via a wireless channel. For another example, the first communication node is a satellite, the second communication node is a base station, and the base station is communicated with the satellite via a wireless channel. For another example, the first communication node is a terminal, the second communication node is a satellite, and the satellite is communicated with the terminal via a wireless channel. For another example, the first communication node is a satellite, the second communication node is a terminal, and the terminal is communicated with the satellite via a wireless channel. For another example, the first communication node is a ground device, the second communication node is an aircraft, and the aircraft is communicated with the ground device via a wireless channel. For another example, the first communication node is a first aircraft, the second communication node is a second aircraft, and the first aircraft is communicated with the second aircraft via a wireless channel.

In a communication process, taking the first communication node sending data to the second communication node as an example, the second communication node receives the data sent from the first communication node, so the first communication node may be referred to as a sending end. Correspondingly, the second communication node may be referred to as a receiving end. Alternatively, the second communication node sends data to the first communication node, and the first communication node may be referred to as a receiving end. Correspondingly, the second communication node may be referred to as a sending end.

It should be noted that FIG. 1 is merely an exemplary diagram of an architecture, and a number of devices or nodes included in FIG. 1 and the names of respective devices are not limited, and in addition to the functional nodes shown in FIG. 1, the communication system may further include other nodes or devices (e.g., a core network device).

The system architecture and service scenarios described in the embodiments of the present disclosure are for illustrating the technical solutions of the embodiments of the present disclosure more clearly, and do not constitute a limitation on the technical solutions provided by the embodiments of the present disclosure; those of ordinary skill in the art may know that, with the evolution of network architecture and the emergence of new service scenarios, the technical solutions provided by the embodiments of the present disclosure are also applicable to similar technical problems.

The embodiments provided by the present disclosure are introduced below with reference to the drawings of the specification.

As shown in FIG. 2, the present disclosure provides a data receiving method, the method is applied to a first node, and the method at least includes S101 to S102.

In S101: a first signaling sent from a second communication node is received, where the first signaling is used to indicate a first data transmission scheme.

The first data transmission scheme includes a coding scheme and/or a modulation scheme.

The coding scheme may include a coding method, a coding code rate, and other related information of coding. In an example, in a case where a coding code rate is fixed, the coding scheme includes a coding method. In another example, in a case where a coding method is fixed, the coding scheme includes a coding code rate. In yet another example, the coding scheme includes both a coding method and a coding code rate.

The coding method includes a convolutional code, an iterative decoding (Turbo Code), a low density parity check (LDPC) code, a polar code, and the like. A code rate of coding may include representations of: a ratio of a number of bits before coding to a number of bits after coding, indicating the number of bits before coding in a case where the number of bits after coding is a fixed value, and indicating the number of bits after coding in a case where the number of bits before coding is a fixed value.

The modulation scheme may be used to convert digital information into an analog form suitable for transmission between two points in a wired/wireless system, for example, mapping multiple bits into a complex-valued symbol. The modulation scheme may include a binary phase shift keying (BPSK) modulation, a quadrature phase shift keying (QPSK) modulation, an 8-phase shift keying (8PSK) modulation, a 16 quadrature amplitude modulation (16QAM) modulation, a 32QAM modulation, a 64QAM modulation, a 128QAM modulation, a 256QAM modulation, a 512QAM modulation, a 1024QAM modulation, a 2048QAM modulation, and the like.

In some embodiments, the first signaling indicating the first data transmission scheme, includes that: the first signaling respectively indicates a coding scheme of a transport channel for transmitting data and a modulation scheme of a physical channel, or the first signaling indicates a combination of a coding scheme and a modulation scheme.

In some embodiments, the first signaling may explicitly indicate the first data transmission scheme. Alternatively, the first signaling may also implicitly indicate the first data transmission scheme. In an example, the first signaling may explicitly indicate a coding scheme or indicate a modulation scheme. Alternatively, the first signaling may explicitly indicate a combination of a coding scheme and a modulation scheme. In yet another example, the first signaling may implicitly indicate a coding scheme or indicate a modulation scheme. Alternatively, the first signaling may implicitly indicate a combination of a coding scheme and a modulation scheme.

A manner of implicitly indicating a data transmission scheme may include that: the first signaling indicates a port of a reference signal associated with the transmitted data, and the data transmission scheme is indicated via a port of a demodulation reference signal associated with the transmitted data. For example, the first signaling indicates a port index of a reference signal associated with the transmitted data, and uses the port index to indicate a data transmission scheme associated with the port index. For example, the port index of the reference signal is predefined to be associated with the data transmission scheme, or the port index of the reference signal is predefined to establish a mapping relationship with the data transmission scheme, where different port indexes correspond to different data transmission schemes, or each port index respectively corresponds to a data transmission scheme (e.g., a same data transmission scheme, etc.). For another example, ports of the reference signal are classified into different groups, and each port group respectively corresponds to a data transmission scheme.

Another manner of implicitly indicating a data transmission scheme may include that: the first signaling indicates a transmission frequency band of data, and indicates the data transmission scheme by a position of the frequency band. For example, a starting position of the frequency band is used to indicate the data transmission scheme, that is, a position of a lowest frequency in the frequency band is used to indicate the data transmission scheme. For another example, a position of a highest frequency in the frequency band is used to indicate the data transmission scheme. By indicating the data transmission scheme with the position of the frequency band for data transmission, an appropriate frequency domain position may be selected, so that a channel state at the frequency domain position is suitable for a corresponding transmission scheme to transmit data, that is, the data transmission scheme matches the channel state of the frequency domain position of a transmission frequency band of the data.

In some embodiments, the above first signaling may further be used to indicate at least one port of a reference signal associated with data. The data is data transmitted from the second communication node to the first communication node, that is, the data received by the first communication node according to the first data transmission scheme indicated by the first signaling.

The reference signals provided in the present disclosure include multiple types of reference signals, such as a channel state information reference signal, a demodulation reference signal (DMRS), a phase tracking reference signal (PTRS), a sounding reference signal (SRS), and the like.

In some embodiments, the first signaling further has at least the following implementations.

Implementation 1: the first signaling is used to indicate a data transmission scheme and at least one port of a reference signal associated with data, where the data transmission scheme includes a data transmission scheme for data associated with each port.

Exemplarily, the data transmission scheme indicated by the first signaling may include at least one first data transmission scheme. Each first data transmission scheme respectively corresponds to data associated with a port. That is, the first signaling being used to indicate a data transmission scheme, includes that: the first signaling respectively indicates a data transmission scheme for data associated with each port.

In an example, ports of a reference signal associated with data indicated by the first signaling include port p1 and port p2, so the first signaling indicating a data transmission scheme may include that: the first signaling indicates a data transmission scheme for data associated with the port p1 and a data transmission scheme for data associated with the port p2. That is, the first signaling indicates a data transmission scheme for the data associated with the port p1, and also indicates another data transmission scheme for the data associated with the port p2.

Furthermore, the data transmission scheme for the data associated with the port p1 indicated by the first signaling may match a channel state experienced by a reference signal carried on the port p1, that is, the data transmission scheme for the data associated with the port p1 may match the channel state experienced by the data associated with the port p1. Similarly, the data transmission scheme for the data associated with the port p2 indicated by the first signaling may match a channel state experienced by a reference signal carried on the port p2, that is, the data transmission scheme for the data associated with the port p2 may match the channel state experienced by the data associated with the port p2. Furthermore, the data transmission scheme for the data associated with the port p1 matches a channel state of a wireless channel of a layer where the data associated with the port p1 is located. The data transmission scheme for the data associated with the port p2 matches a channel state of a wireless channel of a layer where the data associated with the port p2 is located.

In another example, ports of a reference signal associated with data indicated by the first signaling include port p1, port p2, and port p3. A port of a reference signal associated with data on a first layer is the port p1, a port of a reference signal associated with data on a second layer is the port p2, and a port of a reference signal associated with data on a third layer is the port p3. Furthermore, based on the port p1, the port p2, and the port p3, the first signaling may indicate a data transmission scheme on the first layer, a data transmission scheme on the second layer, and a data transmission scheme on the third layer, respectively.

In some examples, ports of a reference signal associated with data indicated by the first signaling may include four ports, and the first signaling indicating the data transmission scheme may include that the first signaling indicates, for data associated with respective ports of the four ports, a data transmission scheme.

It should be understood that the above is merely an exemplary description of the ports of the reference signal associated with data indicated by the first signaling, and the ports of the reference signal associated with data may also have other implementations, which are not limited in the present disclosure.

It should be noted that the data and the reference signal associated with the data may be located at a same layer in spatial division multiplexing and experience a same channel state. A port of a reference signal is used for carrying the reference signal. The data transmission scheme includes a data transmission scheme for data associated with each port, that is, the first signaling indicates the data transmission scheme based on the ports of the reference signal associated with the data, which can be construed as that the first signaling indicates the data transmission scheme based on layers in spatial division multiplexing, so that the data transmission scheme matches the channel state of a wireless channel used for transmitting the data, thereby improving the performance of data transmission.

Implementation 2: the first signaling is used to indicate a data transmission scheme, and the first signaling is further used to indicate a first signal.

The first signal is used to provide a reference for receiving a reference signal associated with data, and a coding scheme in the data transmission scheme belongs to a first coding scheme set. Furthermore, the first coding scheme set is determined from at least one coding scheme set based on the first signal.

In some embodiments, a channel characteristic of the first signal is same as a channel characteristic of the reference signal, and the channel characteristic includes at least one of: an average delay, a delay spread, a Doppler frequency, or a Doppler frequency spread.

Exemplarily, taking an example in which the reference signal is a demodulation reference signal, the first signal may be construed as a channel state information reference signal referenced by the demodulation reference signal. For example, in order to facilitate a first communication node to receive the demodulation reference signal, the first signaling may indicate a channel state information reference signal having a same channel characteristic as that of transmission or reception of the demodulation reference signal, so that the first communication node receives a corresponding demodulation reference signal by referring to relevant information for receiving the channel state information reference signal. The demodulation reference signal and the channel state information reference signal may have at least one same channel characteristic, such as a delay spread, an average Doppler frequency, a Doppler frequency spread, or a Doppler frequency.

In some embodiments, the first coding scheme set is determined from at least one coding scheme set based on a type of the first signal.

In some embodiments, a type of the first signal may include a periodic signal, an aperiodic signal, or a semi-persistent signal, so that a second communication node may determine the first coding scheme set from a plurality of candidate coding scheme sets based on the type of the first signal. Furthermore, a coding scheme may be selected from the first coding scheme set, that is, the first signaling indicates the coding scheme from the first coding scheme set. In this way, the coding scheme in the data transmission scheme may be better adapted to the channel state, thereby improving transmission efficiency.

Exemplarily, still taking the above reference signal is a demodulation reference signal as an example, the first signal is a channel state information reference signal referenced by the demodulation reference signal. The type of the channel state information reference signal referenced by the demodulation reference signal may be a periodic channel state information reference signal, an aperiodic channel state information reference signal, or a semi-persistent channel state information reference signal. Correspondingly, different types of channel state information reference signals have different transmission characteristics, and characteristics of carried pieces of channel state information may also be different from each other. Thus, the first coding scheme set may be determined from the plurality of candidate coding scheme sets according to the type of the channel state signal referenced by the demodulation reference signal.

In this way, a coding scheme selected from the first coding scheme set may better match the channel state of a wireless channel for transmitting data. For example, a periodic channel state information reference signal is associated with a coding scheme set 1, an aperiodic channel state information reference signal is associated with a coding scheme set 2, and a semi-persistent channel state information reference signal is associated with a coding scheme set 3. The first coding scheme set is determined from a candidate coding scheme set according to the type of the channel state information reference signal referenced by the demodulation reference signal.

Implementation 3: the first signaling is used to indicate a data transmission scheme, and the first signaling is further used to indicate a frequency band for transmitting data, and the data transmission scheme includes a data transmission scheme for data transmitted on each frequency domain unit in the frequency band. That is, the first signaling being used to indicate the data transmission scheme, includes that: the first signaling respectively indicates a data transmission scheme for data transmitted on each frequency domain unit of the frequency band.

The first signaling may be used to indicate the frequency band for transmitting data. Since the frequency band for transmitting data is composed of a plurality of frequency domain units, the first signaling may indicate the data transmission scheme according to the frequency domain units on the frequency band, that is, the first signaling indicates a data transmission scheme corresponding to each frequency domain unit on the frequency band.

Exemplarily, the data transmission scheme indicated by the first signaling may include at least one second data transmission scheme. Each second data transmission scheme corresponds to data transmitted on a frequency domain unit.

In an example, the frequency band for transmitting data includes frequency domain unit 1 and frequency domain unit 2. Thus, the first signaling indicating the data transmission scheme may include that: the first signaling indicates a data transmission scheme corresponding to data transmitted on the frequency domain unit 1 and a data transmission scheme corresponding to data transmitted on the frequency domain unit 2.

In another example, the frequency band for transmitting data includes frequency domain unit 1, frequency domain unit 2, frequency domain unit 3, and frequency domain unit 4. Thus, the first signaling indicating the data transmission scheme may include that: the first signaling indicates a data transmission scheme corresponding to data transmitted on the frequency domain unit 1, a data transmission scheme corresponding to data transmitted on the frequency domain unit 2, a data transmission scheme corresponding to data transmitted on the frequency domain unit 3, and a data transmission scheme corresponding to data transmitted on the frequency domain unit 4.

It should be understood that the above is only an exemplary description of the frequency band for transmitting data indicated by the first signaling, and the frequency band for transmitting data may also have other possible implementations, which are not limited in the present disclosure.

It should be noted that the first signaling indicates the frequency band for transmitting data and the first signaling indicates the data transmission scheme according to the frequency domain units on the frequency band. That is, the first signaling indicates, according to the frequency domain units on the frequency band, the data transmission scheme corresponding to each frequency domain unit, so that the data transmission scheme for data corresponding to each frequency domain unit is adapted to the channel state of the wireless channel of each frequency domain unit, thereby improving the performance of data transmission.

Implementation 4: the first signaling is used to indicate a data transmission scheme, and the first signaling is further used to indicate an antenna panel for transmitting data; that is, the first signaling being used to indicate the data transmission scheme, includes that: the first signaling respectively indicates a data transmission scheme for data transmitted on each antenna panel.

Exemplarily, the data transmission scheme indicated by the first signaling may include at least one third data transmission scheme. Each third data transmission scheme corresponds to data transmitted on an antenna panel. Alternatively, data transmitted on each antenna panel corresponds to a plurality of third data transmission schemes.

In an example, the antenna panels for transmitting data include antenna panel 1 and antenna panel 2. Thus, the first signaling indicating the data transmission scheme may include that: the first signaling indicates a data transmission scheme corresponding to data transmitted on the antenna panel 1 and a data transmission scheme corresponding to data transmitted on the antenna panel 2.

In another example, the antenna panels for transmitting data include antenna panel 1, antenna panel 2, antenna panel 3, and antenna panel 4. Thus, the first signaling indicating the data transmission scheme may include: the first signaling indicates a data transmission scheme corresponding to data transmitted on the antenna panel 1, a data transmission scheme corresponding to data transmitted on the antenna panel 2, a data transmission scheme corresponding to data transmitted on the antenna panel 3, and a data transmission scheme corresponding to data transmitted on the antenna panel 4.

It should be noted that the first signaling indicates the antenna panel for transmitting data and the first signaling indicates transmission of the data transmission scheme according to the antenna panel. That is, the first signaling indicates, according to the antenna panel, the data transmission scheme corresponding to the respective antenna panel, so that the data transmission scheme corresponding to each antenna panel is adapted to the channel state of the wireless channel of each antenna panel, thereby improving the performance of data transmission.

Implementation 5: the first signaling is used to indicate a data transmission scheme, and the first signaling is further used to indicate at least one second signal, where the second signal corresponds to at least one port group of a reference signal associated with data, and the second signal is used to provide a reference based on a common channel characteristic for a corresponding port group; that is, the first signaling being used to indicate the data transmission scheme, includes that: the first signaling respectively indicates a data transmission scheme for data associated with a port group corresponding to each second signal.

The above common channel characteristic includes at least one of: an average delay, a delay spread, a Doppler frequency, or a Doppler frequency spread.

The second signal may be construed as a signal that provides a reference for the reference signal, for example, providing a reference based on a common channel characteristic. Taking the reference signal is a demodulation reference signal as an example, the second signal may provide a reference for the demodulation reference signal, for example, the above channel state information reference signal that provides a reference for receiving the demodulation reference signal.

Exemplarily, the data transmission scheme indicated by the first signaling may include at least one fourth data transmission scheme. Each fourth data transmission scheme corresponds to data associated with a port group.

In an example, the first signaling indicates that the second signal providing reference for the reference signal are second signal 1 and second signal 2. Moreover, the port group of the reference signal referenced to the second signal 1 is port group 1, and the first signaling may further indicate a data transmission scheme of data associated with the port group 1. The port group of the reference signal referenced to the second signal 2 is port group 2, and the first signaling may further indicate a data transmission scheme of data associated with the port group 2.

In another example, the first signaling indicates that the second signals providing reference for the reference signal are second signal 1, second signal 2, second signal 3, and second signal 2. Moreover, the port group of the reference signal referenced to the second signal 1 is port group 1, and the first signaling may further indicate a data transmission scheme of data associated with the port group 1. The port group of the reference signal referenced to the second signal 2 is port group 2, and the first signaling may further indicate a data transmission scheme of data associated with the port group 2. The port group of the reference signal referenced to the second signal 3 is port group 3, and the first signaling may further indicate a data transmission scheme of data associated with the port group 3. The port group of the reference signal referenced to the second signal 4 is port group 4, and the first signaling may further indicate a data transmission scheme of data associated with the port group 4.

It should be noted that the first signaling indicates the port group of the reference signal based on the second signal for providing reference, and indicates, according to the second signal, the data transmission scheme associated with the port group of the reference signal. The channel state of each port group is same as the channel state of the second signal referenced by a corresponding port group, and the channel states of different port groups are different from each other. Thus, the data transmission scheme associated with each port group may match the channel state of the corresponding port group, thereby improving the performance of data transmission.

Implementation 6: the first signaling is used to indicate a data transmission scheme, and the first signaling is further used to indicate at least one transport block for transmitting data and at least one port of a reference signal associated with data transmitted by each transport block, where the data transmission scheme includes a data transmission scheme for data transmitted by each transport block. That is, the first signaling being used to indicate the data transmission scheme, includes that: the first signaling respectively indicates the data transmission scheme for data transmitted by each transport block.

In an implementation, ports of a demodulation reference signal associated with a same transport block are located in a same code division multiplexing group, and ports of a demodulation reference signal associated with different transport blocks are located in different code division multiplexing groups.

Exemplarily, the at least one transport block includes a first transport block and a second transport block, and ports of a reference signal associated with data transmitted by the first transport block are carried on a first code division multiplexing group. Ports of a reference signal associated with data transmitted by the second transport block are carried on a second code division multiplexing group.

In an example, a number of transport blocks for transmitting data indicated by the first signaling is two, the transport blocks includes transport block 1 and transport block 2. A data transmission scheme for data transmitted by the transport block 1 is data transmission scheme 1, and a data transmission scheme for data transmitted by the transport block 2 is data transmission scheme 2. Furthermore, ports of a reference signal associated with the transport block 1 are port 1 and port 2, and ports of a reference signal associated with the transport block 2 are port 3 and port 4. The port 1 and the port 2 are located in a code division multiplexing group 1, the port 3 and the port 4 are located in a code division multiplexing group 2, and the code division multiplexing group 1 is different from the code division multiplexing group 2.

It should be understood that two or more ports are located in a same code division multiplexing group, that is, the two or more ports are located on a same group of time-frequency resources, and the ports are distinguished from each other by different code sequences, that is, the two or more ports are located on the same group of time-frequency resources in a code division multiplexing manner. Two ports are located in different code division multiplexing groups, that is, the two ports are located on different time-frequency resource groups.

In another example, the number of transport blocks for transmitting data indicated by the first signaling is two, the transport blocks includes transport block 1 and transport block 2. A data transmission scheme for data transmitted by the transport block 1 is data transmission scheme 1, and a data transmission scheme for data transmitted by the transport block 2 is data transmission scheme 2. Furthermore, ports of a reference signal associated with the transport block 1 are port 1, port 2, port 3, and port 4, and ports of a reference signal associated with the transport block 2 are port 5, port 6, port 7, and port 8. The port 1, the port 2, the port 3, and the port 4 are located in a code division multiplexing group 1, the port 5, the port 6, the port 7, and the port 8 are located in a code division multiplexing group 2, and the code division multiplexing group 1 is different from the code division multiplexing group 2.

It should be noted that, since the channel states on the time-frequency resources in a same code division multiplexing group are same, channel state variations of ports located in the same code division multiplexing group are the same. However, the channel states on the time-frequency resources in different code division multiplexing groups are different, so channel state variations of ports located in different code division multiplexing groups are different from each other. The first signaling respectively indicates a data transmission scheme for each transport block, and indicates, for a same transport block, ports of a reference signal located in a same code division multiplexing group, and indicates, for different transport blocks, ports of a reference signal located in different code division multiplexing groups. In this way, the data transmission scheme of each transport block may be adapted to the channel state experienced by the demodulation reference signal of the corresponding reference signal port, that is, the data transmission scheme of each transport block is adapted to the channel state experienced by each transport block, thereby improving the performance of data transmission.

In another implementation, ports of a demodulation reference signal associated with the same transport block are located in a same time domain unit, and ports of a demodulation reference signal associated with different transport blocks are located in different time domain units.

Exemplarily, the at least one transport block includes a first transport block and a second transport block, ports of a reference signal associated with data transmitted by the first transport block are carried on a first time domain unit, and ports of a reference signal associated with data transmitted by the second transport block are carried on a second time domain unit.

In an example, the number of transport blocks for transmitting data indicated by the first signaling is two, the transport blocks includes a transport block 1 and a transport block 2. A data transmission scheme for data transmitted by the transport block 1 is data transmission scheme 1, and a data transmission scheme for data transmitted by the transport block 2 is data transmission scheme 2. Furthermore, ports of a reference signal associated with the transport block 1 are a port 1 and a port 2, and ports of a reference signal associated with the transport block 2 are a port 3 and a port 4. The port 1 and the port 2 are located in time domain unit 1, the port 3 and the port 4 are located in time domain unit 2, and the time domain unit 1 is different from the time domain unit 2.

In another example, the number of transport blocks for transmitting data indicated by the first signaling is two, the transport blocks includes transport block 1 and transport block 2. A data transmission scheme for data transmitted by the transport block 1 is data transmission scheme 1, and a data transmission scheme for data transmitted by the transport block 2 is data transmission scheme 2. Furthermore, ports of a reference signal associated with the transport block 1 are port 1, port 2, port 3, and port 4, and ports of a reference signal associated with the transport block 2 are port 5, port 6, port 7, and port 8. The port 1, the port 2, the port 3, and the port 4 are located in a time domain unit 1, the port 5, the port 6, the port 7, and the port 8 are located in a time domain unit 2, and the time domain unit 1 is different from the time domain unit 2.

It should be noted that, since the channel states on the time-frequency resources in a same time domain unit are same, channel state variations of ports located in the same time domain unit are the same. However, the channel states on the time-frequency resources in different time domain units are different, so channel state variations of ports located in different time domain units are different from each other. The first signaling respectively indicates a data transmission scheme for data transmitted by each transport block, and indicates, for a same transport block, ports of a demodulation reference signal located in the same time domain unit, and indicates, for different transport blocks, ports of a demodulation reference signal located in different time domain units. In this way, the data transmission scheme corresponding to each transport block may be adapted to the channel state experienced by the reference signal of the corresponding reference signal port, that is, the transmission scheme of each transport block is adapted to the channel state experienced by each transport block, thereby improving the performance of data transmission.

In yet another implementation, ports of a demodulation reference signal associated with the same transport block are located in a same frequency domain unit, and ports of a demodulation reference signal associated with different transport blocks are located in different frequency domain units.

Exemplarily, the at least one transport block includes a first transport block and a second transport block, ports of a reference signal associated with data transmitted by the first transport block are carried on a first frequency domain unit, and ports of a reference signal associated with data transmitted by the second transport block are carried on a second frequency domain unit.

In an example, the number of transport blocks for transmitting data indicated by the first signaling is two, the transport blocks includes a transport block 1 and a transport block 2. A data transmission scheme for data transmitted by the transport block 1 is data transmission scheme 1, and a data transmission scheme for data transmitted by the transport block 2 is data transmission scheme 2. Furthermore, ports of a reference signal associated with the transport block 1 are port 1 and port 2, and ports of a reference signal associated with the transport block 2 are port 3 and port 4. The port 1 and the port 2 are located in frequency domain unit 1, the port 3 and the port 4 are located in frequency domain unit 2, and the frequency domain unit 1 is different from the frequency domain unit 2.

In another example, the number of transport blocks for transmitting data indicated by the first signaling is two, the transport blocks includes a transport block 1 and a transport block 2. A data transmission scheme for data transmitted by the transport block 1 is a data transmission scheme 1, and a data transmission scheme for data transmitted by the transport block 2 is a data transmission scheme 2. Furthermore, ports of a reference signal associated with the transport block 1 are port 1, port 2, port 3, and port 4, and ports of a reference signal associated with the transport block 2 are port 5, port 6, port 7, and port 8. The port 1, the port 2, the port 3, and the port 4 are located in a frequency domain unit 1, the port 5, the port 6, the port 7, and the port 8 are located in a frequency domain unit 2, and the frequency domain unit 1 is different from the frequency domain unit 2.

It should be noted that, since channel states on time-frequency resources on a same frequency domain unit are same, so channel state variations of ports located on the same frequency domain unit are the same. However, channel states on time-frequency resources on different frequency domain units are different from each other, so channel state variations of ports located on different frequency domain units are different from each other. The first signaling indicates a data transmission scheme for data transmitted by each transport block respectively, and indicates, for a same transport block, ports of a reference signal located in a same frequency domain unit, and indicates, for different transport blocks, ports of a reference signal located in different frequency domain units. In this way, the data transmission scheme of each transport block may be adapted to the channel state experienced by the demodulation reference signal of the corresponding demodulation reference signal port, that is, the data transmission scheme of each transport block is adapted to the channel state experienced by each transport block, thereby improving the performance of data transmission.

Implementation 7: the first signaling is further used to indicate at least one transport block for transmitting data, and indicate, for each transport block, at least one port of a reference signal associated with the transmitted data and a frequency domain density of a corresponding port; the first signaling indicating the data transmission scheme includes that the first signaling indicates, for each transport block, the data transmission scheme of the transmitted data.

In an example, the number of transport blocks for transmitting data indicated by the first signaling is two, the transport blocks include a transport block 1 and a transport block 2. A data transmission scheme for data transmitted by the transport block 1 is a data transmission scheme 1, and a data transmission scheme for data transmitted by the transport block 2 is a data transmission scheme 2. Furthermore, ports of a reference signal associated with the transport block 1 are a port 1 and a port 2, and ports of a reference signal associated with the transport block 2 are a port 3 and a port 4. A frequency domain density of the port 1 and the port 2 is r1, and a frequency domain density of the port 3 and the port 4 is r2.

In another example, the number of transport blocks for transmitting data indicated by the first signaling is two, the transport blocks includes a transport block 1 and a transport block 2. A data transmission scheme for data transmitted by the transport block 1 is a data transmission scheme 1, and a data transmission scheme for data transmitted by the transport block 2 is a data transmission scheme 2. Furthermore, ports of a reference signal associated with the transport block 1 are a port 1, a port 2, a port 3, and a port 4, and ports of a reference signal associated with the transport block 2 are a port 5, a port 6, a port 7, and a port 8. A frequency domain density of the port 1, the port 2, the port 3, and the port 4 is r1, and a frequency domain density of the port 5, the port 6, the port 7, and the port 8 is r2.

It should be noted that, since channel state variations of ports with a same frequency domain density are same, and channel states of ports with different frequency domain densities are different from each other, the first signaling respectively indicates a data transmission scheme for each transport block, and indicates, for a same transport block, ports of a demodulation reference signal having a same frequency domain density, and indicates, for different transport blocks, ports of a demodulation reference signal having different frequency domain densities. In this way, the data transmission scheme of each transport block may be adapted to the channel state experienced by the demodulation reference signal of the corresponding demodulation reference signal port, that is, the data transmission scheme of each transport block is adapted to the channel state experienced by each transport block.

Implementation 8: the first signaling is used to indicate a data transmission scheme, and the first signaling is further used to indicate at least one transport block for transmitting data, and indicate, for each transport block, at least one port of a reference signal associated with the transmitted data and a transmission power of a corresponding port; the first signaling indicating the data transmission scheme includes that the first signaling indicates, for each transport block, the data transmission scheme of the transmitted data.

In an example, the number of transport blocks for transmitting data indicated by the first signaling is two, the transport blocks includes a transport block 1 and a transport block 2. A data transmission scheme for data transmitted by the transport block 1 is a data transmission scheme 1, and a data transmission scheme for data transmitted by the transport block 2 is a data transmission scheme 2. Furthermore, ports of a reference signal associated with the transport block 1 are port 1 and port 2, and ports of a reference signal associated with the transport block 2 are port 3 and port 4. A transmission power of the port 1 and the port 2 is p1, and a transmission power of the port 3 and the port 4 is p2.

In another example, the number of transport blocks for transmitting data indicated by the first signaling is two, the transport blocks includes a transport block 1 and a transport block 2. A data transmission scheme for data transmitted by the transport block 1 is a data transmission scheme 1, and a data transmission scheme for data transmitted by the transport block 2 is a data transmission scheme 2. Furthermore, ports of a reference signal associated with the transport block 1 are a port 1, a port 2, a port 3, and a port 4, and ports of a reference signal associated with the transport block 2 are a port 5, a port 6, a port 7, and a port 8. A transmission power of the port 1, the port 2, the port 3, and the port 4 is p1, and a transmission power of the port 5, the port 6, the port 7, and the port 8 is p2.

It should be noted that, since channel state variations of ports with a same transmission power are same, and channel states of ports with different transmission powers are different from each other. The first signaling respectively indicates a data transmission scheme for data transmitted by each transport block, and indicates, for a same transport block, ports of a reference signal having a same transmission power, and indicates, for different transport blocks, ports of a reference signal having different transmission powers. In this way, the data transmission scheme of each transport block may be adapted to the channel state experienced by the reference signal of the corresponding reference signal port, that is, the data transmission scheme of each transport block is adapted to the channel state experienced by each transport block.

In some embodiments, a frequency domain density of at least one port is determined based on a data transmission scheme.

Exemplarily, the first signaling is used to indicate a data transmission scheme and at least one port of a reference signal associated with data. Further, the frequency domain density of at least one port may be determined based on the data transmission scheme. It should be noted that different frequency domain densities of ports may be used to represent different degrees of accuracy of channel estimation, where the greater the frequency domain density of a port, the higher the achievable accuracy of channel estimation, and correspondingly, the smaller the frequency domain density of a port, the lower the achievable accuracy of channel estimation. That is, frequency domain densities of ports associated with different data are different from each other. Thus, the first signaling indicates the data transmission scheme, and the frequency domain density of a port may be further determined based on the data transmission scheme.

For example, a frequency domain density of a port associated with a candidate data transmission scheme 1 is a frequency domain density 1, a frequency domain density of a port associated with a candidate data transmission scheme 2 is a frequency domain density 2, ..., and a frequency domain density of a port associated with a candidate data transmission scheme K is a frequency domain density K. A frequency domain density i and a frequency domain density j may be same, or may be different from each other.

It should be noted that the frequency domain density of a port of the associated demodulation reference signal is determined according to the data transmission scheme, so that the accuracy of channel estimation may be adapted to the data transmission scheme, thereby improving the performance of data transmission.

In some embodiments, a data transmission scheme is determined based on a frequency domain density of at least one port.

The first signaling indicates the data transmission scheme in an implicit manner.

Exemplarily, the first signaling indicates a port of a reference signal associated with the transmitted data, and indicates a frequency domain density of the port. That is, the data transmission scheme is indicated in an implicit manner. For example, the data transmission scheme is determined according to a frequency domain density of a port of the reference signal associated with the transmitted data. It should be noted that different frequency domain densities of ports may be used to represent different degrees of accuracy of channel estimation, where the greater the frequency domain density of a port, the higher the achievable accuracy of channel estimation, and correspondingly, the smaller the frequency domain density of a port, the lower the achievable accuracy of channel estimation. That is, frequency domain densities of ports associated with different data are different from each other. Thus, the first signaling indicates the frequency domain density of a port, and the data transmission scheme associated with the port may be determined according to the frequency domain density of the port.

For example, frequency domain density 1 of a port is associated with data transmission scheme 1, frequency domain density 2 of a port is associated with data transmission scheme 2, ..., and frequency domain density K of a port is associated with data transmission scheme K. A transmission scheme i and a transmission scheme j may be same, or may be different from each other.

It should be noted that the data transmission scheme is determined according to the frequency domain density of a port of the associated demodulation reference signal, so that the accuracy of channel estimation may be adapted to the data transmission scheme, thereby improving the performance of data transmission.

In some embodiments, a data transmission scheme of data transmitted by each transport block includes an index number of a combination of a coding scheme and a modulation scheme of the transport block. At least one transport block includes a first transport block and a second transport block, and both an index number of a combination of a coding scheme and a modulation scheme of the first transport block and an index number of a combination of a coding scheme and a modulation scheme of the second transport block are less than a first threshold value.

Exemplarily, the first signaling may indicate an index number of a combination of a coding scheme and a modulation scheme of a first transport block and an index number of a combination of a coding scheme and a modulation scheme of a second transport block, and both the index number of the combination of the second transport block and the index number of the combination of the first transport block are less than a first threshold value.

It should be understood that a value of the index number of the combination of the coding scheme and the modulation scheme represents a magnitude of a data transmission rate. It should be noted that, since the channel state experienced by the first transport block and the channel state experienced by the second transport block have a certain correlation, the data transmission scheme of the first transport block and the data transmission scheme of the second transport block have a certain correlation. The index number of the combination of the second transport block and the index number of the combination of the first transport block being less than a first threshold may enable the data transmission schemes of the two transport blocks to match the channel states experienced by the two transport blocks, thereby improving the performance of data transmission.

In some embodiments, the data transmission scheme is determined by a second communication node based on a channel state. Further, the second communication node may notify the first communication node of the data transmission scheme via a control information signaling (i.e., first signaling) to perform data transmission. For example, the second communication node is a base station that transmits a channel state information reference signal, the first communication node is a terminal that measures the channel state information reference signal to obtain channel state information, the terminal reports the channel state information to the base station, the base station formulates a data transmission scheme based on the received channel state information, the base station transmits data according to the formulated data transmission scheme and notifies the formulated data transmission scheme via the control information signaling (i.e., first signaling), and the terminal receives the data transmitted from the base station according to the received data transmission scheme. For another example, the terminal transmits an uplink reference signal, the base station measures the uplink reference signal to obtain channel state information, and formulates a data transmission scheme according to the obtained channel state information, the base station notifies the formulated data transmission scheme via the control information signaling, the terminal transmits data to the base station according to the received data transmission scheme, and the base station receives the data of the terminal according to the data transmission scheme.

In S102: data sent from a second communication node is received according to a data transmission scheme indicated by a first signaling.

Exemplarily, a first communication node may receive data based on a reference signal associated with the data sent from a second communication node. Taking the reference signal is a demodulation reference signal (DMRS) as an example, in an example, the first communication node may acquire a wireless channel coefficient of data transmission via the demodulation reference signal, and then receive the data sent from the second communication node based on the acquired wireless channel coefficient. The data sent from the second communication node may be demodulated according to the wireless channel coefficient. In another example, the data may be demodulated with reference to the demodulation reference signal, and a port of the demodulation reference signal is a mapping of an antenna port for transmitting the demodulation reference signal on a wireless transmission resource, for example, a mapping on a time-frequency domain resource, or a mapping on a time-frequency-code domain resource. Since a port of the demodulation reference signal is used to carry the demodulation reference signal, a port of the demodulation reference signal associated with transmitted data is used to carry the demodulation reference signal associated with the transmitted data.

Based on the technical solution provided in the present disclosure, the first communication node may perform data transmission based on the data transmission scheme provided by the second communication node, the data transmission scheme may be configured based on a channel state, so that the data transmission scheme matches the channel state of the transmitted data, thereby the second communication node performing data transmission based on the data transmission scheme may improve the performance of data transmission, where the performance of data transmission includes an efficiency of data transmission, an accuracy of data transmission, and the like.

In some embodiments, as shown in FIG. 3, the present disclosure further provides a data sending method, the method is applied to a second communication node, and the method at least includes S201 to S202.

In S201: a first signaling is sent to a first communication node, where the first signaling is used to indicate a data transmission scheme.

The data transmission scheme includes a coding scheme and/or a modulation scheme.

In some embodiments, the first signaling is further used to indicate at least one port of a reference signal associated with data.

In some embodiments, the first signaling being used to indicate a data transmission scheme, includes that: the first signaling respectively indicates a data transmission scheme of data associated with each port.

In some embodiments, the first signaling is further used to indicate a first signal, where the first signal is used to provide a reference for a reference signal associated with received data, and the coding scheme belongs to a first coding scheme set; the first coding scheme set is determined from at least one coding scheme set based on the first signal.

In some embodiments, a channel characteristic of the first signal is same as a channel characteristic of the reference signal, and the channel characteristic includes at least one of: an average delay, a delay spread, a Doppler frequency, or a Doppler frequency spread.

In some embodiments, the first signaling is further used to indicate a frequency band for transmitting data; the first signaling being used to indicate a data transmission scheme, includes that: the first signaling respectively indicates a data transmission scheme of data transmitted on each frequency domain unit of the frequency band.

In some embodiments, the first signaling is further used to indicate an antenna panel for transmitting data; the first signaling being used to indicate a data transmission scheme, includes that: the first signaling respectively indicates a data transmission scheme of data transmitted by each antenna panel.

In some embodiments, the first signaling is further used to indicate at least one second signal, where the second signal corresponds to at least one port group of a reference signal associated with data, and the second signal is used to provide a reference based on a common channel characteristic for a corresponding port group; the first signaling being used to indicate a data transmission scheme, includes that: the first signaling respectively indicates a data transmission scheme of data associated with the port group corresponding to each second signal.

In some embodiments, the first signaling is further used to indicate at least one transport block for transmitting data and at least one port of a reference signal associated with data transmitted by each transport block; the first signaling being used to indicate a data transmission scheme, includes that: the first signaling respectively indicates a data transmission scheme of data transmitted by each transport block.

In some embodiments, the at least one transport block includes a first transport block and a second transport block, and ports of the reference signal associated with the data transmitted by the first transport block are carried in a first code division multiplexing group; and ports of the reference signal associated with the data transmitted by the second transport block are carried in a second code division multiplexing group.

In some embodiments, the at least one transport block includes a first transport block and a second transport block, and ports of the reference signal associated with the data transmitted by the first transport block are carried in a first time domain unit; and ports of the reference signal associated with the data transmitted by the second transport block are carried in a second time domain unit.

In some embodiments, the at least one transport block includes a first transport block and a second transport block, and ports of the reference signal associated with the data transmitted by the first transport block are carried in a first frequency domain unit; and ports of the reference signal associated with the data transmitted by the second transport block are carried in a second frequency domain unit.

In some embodiments, the first signaling is further used to indicate, for each transport block, a frequency domain density of a port of a reference signal associated with data transmitted by the transport block.

In some embodiments, the first signaling is further used to indicate, for each transport block, a transmission power of a port of a reference signal associated with data transmitted by the transport block.

In some embodiments, a data transmission scheme of data transmitted by each transport block includes an index number of a combination of a coding scheme and a modulation scheme of the transport block; the at least one transport block includes a first transport block and a second transport block, and both an index number of a combination of a coding scheme and a modulation scheme of the first transport block and an index number of a combination of a coding scheme and a modulation scheme of the second transport block are less than a first threshold.

In some embodiments, a frequency domain density of at least one port is determined based on a data transmission scheme.

In some embodiments, a data transmission scheme is determined based on a frequency domain density of at least one port.

In S202: data is sent to a first communication node according to a data transmission scheme indicated by a first signaling.

In addition, for detailed descriptions of S201 to S202, reference may be made to the relevant descriptions of S101 to S102 above, and details are not repeated herein.

The above mainly introduces the solution provided by the present disclosure from the perspective of interaction between communication nodes. It can be understood that each node, such as an apparatus or device, includes hardware structures and/or software modules corresponding to executing each function in order to implement the above functions. Those skilled in the art should easily realize that the algorithm steps of each example described in combination with the embodiments disclosed herein can be implemented by hardware or a combination of hardware and computer software. Whether a function is executed by hardware or by computer software driving hardware depends on a specific application and design constraint conditions of a technical scheme. Professional technicians may use different methods for each specific application to implement the described functions, but such implementation should not be considered beyond the scope of the present disclosure.

Embodiments of the present disclosure may divide functional modules of a communication apparatus according to the above method embodiments. For example, each functional module may be divided corresponding to each function, or two or more functions may be integrated into a functional module. The integrated module mentioned above may be implemented in a form of hardware or in a form of software. It should be noted that the division of modules in the embodiments of the present disclosure is illustrative, merely a logical function division, and there may be other division manners in actual implementation. The following takes dividing each functional module corresponding to each function as an example for description.

FIG. 4 shows a schematic diagram of a composition of a communication apparatus provided by an embodiment of the present disclosure. As shown in FIG. 4, the communication apparatus 40 includes a first receiving module 401 and a second receiving module 402.

The first receiving module 401 is configured to receive a first signaling sent from a second communication node, where the first signaling is used to indicate a data transmission scheme, and the data transmission scheme includes a coding scheme and/or a modulation scheme.

The second receiving module 402 is configured to receive data sent from the second communication node according to the data transmission scheme indicated by the first signaling.

In some embodiments, the first signaling is further used to indicate at least one port of a reference signal associated with data.

In some embodiments, the first signaling being used to indicate a data transmission scheme, includes that: the first signaling respectively indicates a data transmission scheme of data associated with each port.

In some embodiments, the first signaling is further used to indicate a first signal, where the first signal is used to provide a reference for a reference signal associated with received data, and the coding scheme belongs to a first coding scheme set; the first coding scheme set is determined from at least one coding scheme set based on the first signal.

In some embodiments, a channel characteristic of the first signal is same as a channel characteristic of the reference signal, and the channel characteristic includes at least one of: an average delay, a delay spread, a Doppler frequency, or a Doppler frequency spread.

In some embodiments, the first signaling is further used to indicate a frequency band for transmitting data; the first signaling being used to indicate a data transmission scheme, includes that: the first signaling respectively indicates a data transmission scheme of data transmitted on each frequency domain unit of the frequency band.

In some embodiments, the first signaling is further used to indicate an antenna panel for transmitting data; the first signaling being used to indicate a data transmission scheme, includes that: the first signaling respectively indicates a data transmission scheme of data transmitted by each antenna panel.

In some embodiments, the first signaling is further used to indicate at least one second signal, where the second signal corresponds to at least one port group of a reference signal associated with data, and the second signal is used to provide a reference based on a common channel characteristic for a corresponding port group; the first signaling being used to indicate a data transmission scheme, includes that: the first signaling respectively indicates a data transmission scheme of data associated with the port group corresponding to each second signal.

In some embodiments, the first signaling is further used to indicate at least one transport block for transmitting data and at least one port of a reference signal associated with data transmitted by each transport block; the first signaling being used to indicate a data transmission scheme, includes that: the first signaling respectively indicates a data transmission scheme of data transmitted by each transport block.

In some embodiments, the at least one transport block includes a first transport block and a second transport block, and ports of a reference signal associated with the data transmitted by the first transport block are carried in a first code division multiplexing group; and ports of a reference signal associated with the data transmitted by the second transport block are carried in a second code division multiplexing group.

In some embodiments, the at least one transport block includes a first transport block and a second transport block, and ports of a reference signal associated with the data transmitted by the first transport block are carried in a first time domain unit; and ports of a reference signal associated with the data transmitted by the second transport block are carried in a second time domain unit.

In some embodiments, the at least one transport block includes a first transport block and a second transport block, and ports of a reference signal associated with the data transmitted by the first transport block are carried in a first frequency domain unit; and ports of a reference signal associated with the data transmitted by the second transport block are carried in a second frequency domain unit.

In some embodiments, the first signaling is further used to indicate, for each transport block, a frequency domain density of a port of a reference signal associated with data transmitted by the transport block.

In some embodiments, the first signaling is further used to indicate, for each transport block, a transmission power of a port of a reference signal associated with data transmitted by the transport block.

In some embodiments, a data transmission scheme of data transmitted by each transport block includes an index number of a combination of a coding scheme and a modulation scheme of the transport block; the at least one transport block includes a first transport block and a second transport block, and both an index number of a combination of a coding scheme and a modulation scheme of the first transport block and an index number of a combination of a coding scheme and a modulation scheme of the second transport block are less than a first threshold.

In some embodiments, a frequency domain density of at least one port is determined based on a data transmission scheme.

In some embodiments, a data transmission scheme is determined based on a frequency domain density of at least one port.

For more detailed descriptions of the above first receiving module 401 and second receiving module 402, as well as more detailed descriptions of various technical features and descriptions of beneficial effects, reference may be made to the corresponding method embodiment parts above, and details are not repeated herein.

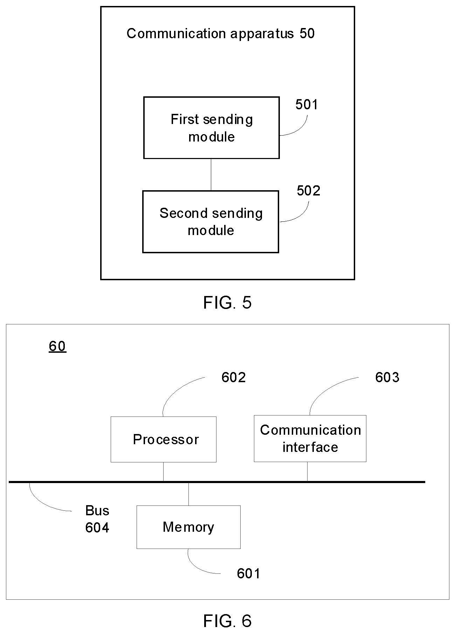

FIG. 5 shows a schematic diagram of a composition of a communication apparatus provided by an embodiment of the present disclosure. As shown in FIG. 5, the communication apparatus 50 includes a first sending module 501 and a second sending module 502.

A first sending module 501 is configured to send a first signaling to a first communication node; where the first signaling is used to indicate a data transmission scheme. The data transmission scheme includes a coding scheme and/or a modulation scheme.

A second sending module 502 is configured to receive data sent from a second communication node according to the data transmission scheme indicated by the first signaling.

In some embodiments, the first signaling is further used to indicate at least one port of a reference signal associated with data.

In some embodiments, the first signaling being used to indicate a data transmission scheme, includes that: the first signaling respectively indicates a data transmission scheme of data associated with each port.

In some embodiments, the first signaling is further used to indicate a first signal, where the first signal is used to provide a reference for a reference signal associated with received data, and the coding scheme belongs to a first coding scheme set; the first coding scheme set is determined from at least one coding scheme set based on the first signal.

In some embodiments, a channel characteristic of the first signal is same as a channel characteristic of the reference signal, and the channel characteristic includes at least one of: an average delay, a delay spread, a Doppler frequency, or a Doppler frequency spread.

In some embodiments, the first signaling is further used to indicate a frequency band for transmitting data; the first signaling being used to indicate a data transmission scheme, includes that: the first signaling respectively indicates a data transmission scheme of data transmitted on each frequency domain unit of the frequency band.

In some embodiments, the first signaling is further used to indicate an antenna panel for transmitting data; the first signaling being used to indicate a data transmission scheme, includes that: the first signaling respectively indicates a data transmission scheme of data transmitted by each antenna panel.

In some embodiments, the first signaling is further used to indicate at least one second signal, where the second signal corresponds to at least one port group of a reference signal associated with data, and the second signal is used to provide a reference based on a common channel characteristic for a corresponding port group; the first signaling being used to indicate a data transmission scheme, includes that: the first signaling respectively indicates a data transmission scheme of data associated with the port group corresponding to each second signal.

In some embodiments, the first signaling is further used to indicate at least one transport block for transmitting data and at least one port of a reference signal associated with data transmitted by each transport block; the first signaling being used to indicate a data transmission scheme, includes that: the first signaling respectively indicates a data transmission scheme of data transmitted by each transport block.

In some embodiments, the at least one transport block includes a first transport block and a second transport block, and ports of a reference signal associated with the data transmitted by the first transport block are carried in a first code division multiplexing group; and ports of a reference signal associated with the data transmitted by the second transport block are carried in a second code division multiplexing group.

In some embodiments, the at least one transport block includes a first transport block and a second transport block, and ports of a reference signal associated with the data transmitted by the first transport block are carried in a first time domain unit; and ports of a reference signal associated with the data transmitted by the second transport block are carried in a second time domain unit.

In some embodiments, the at least one transport block includes a first transport block and a second transport block, and ports of a reference signal associated with the data transmitted by the first transport block are carried in a first frequency domain unit; and ports of a reference signal associated with the data transmitted by the second transport block are carried in a second frequency domain unit.

In some embodiments, the first signaling is further used to indicate, for each transport block, a frequency domain density of a port of a reference signal associated with data transmitted by the transport block.

In some embodiments, the first signaling is further used to indicate, for each transport block, a transmission power of a port of a reference signal associated with data transmitted by the transport block.

In some embodiments, a data transmission scheme of data transmitted by each transport block includes an index number of a combination of a coding scheme and a modulation scheme of the transport block; the at least one transport block includes a first transport block and a second transport block, and both an index number of a combination of a coding scheme and a modulation scheme of the first transport block and an index number of a combination of a coding scheme and a modulation scheme of the second transport block are less than a first threshold.

In some embodiments, a frequency domain density of at least one port is determined based on a data transmission scheme.

In some embodiments, a data transmission scheme is determined based on a frequency domain density of at least one port.

For more detailed descriptions of the above first sending module 501 and second sending module 502, as well as more detailed descriptions of various technical features and descriptions of beneficial effects, reference may be made to the corresponding method embodiment parts above, and details are not repeated herein.

It should be noted that the modules in FIG. 4 or FIG. 5 may also be referred to as units, for example, a processing module may be referred to as a processing unit. In addition, in the embodiments shown in FIG. 4 or FIG. 5, names of various modules may not be the names shown in the drawings; for example, a sending module or a receiving module may also be referred to as a communication module.

If each unit in FIG. 4 or FIG. 5 is implemented in a form of a software function module and sold or used as an independent product, it may be stored in a computer-readable storage medium. Based on this understanding, the technical solution of the present disclosure in essence, or a part contributing to the related arts, or all or a part of the technical solution may be embodied in a form of a software product; the computer software product is stored in a storage medium and includes instructions for enabling a computer device (which may be a personal computer, a server, or a network device, etc.) or a processor to execute all or part of the steps of the methods in various embodiments of the present disclosure. Storage media storing computer software products include: USB flash drives, mobile hard disks, read-only memory (ROM), random access memory (RAM), magnetic disks, or optical discs, and various other media that may store program code.

In a case of implementing the functions of the above integrated module in the form of hardware, an embodiment of the present disclosure provides a structural schematic diagram of a communication apparatus. As shown in FIG. 6, the communication apparatus 60 includes: a processor 602, a communication interface 603, and a bus 604. In some embodiments, the communication apparatus 60 may further include a memory 601.

The processor 602 may be configured to implement or execute various exemplary logical blocks, modules, and circuits described in connection with a content of the present disclosure. The processor 602 may be a central processing unit, a general-purpose processor, a digital signal processor, an application specific integrated circuit, a field programmable gate array, or other programmable logic devices, transistor logic devices, hardware components, or any combination thereof. The processor 602 may implement or execute various exemplary logical blocks, modules, and circuits described in connection with the content of the present disclosure. The processor 602 may also be a combination that implements computing functions, for example, including a combination of one or more microprocessors, a combination of a digital signal processor (DSP) and a microprocessor, and the like.

The communication interface 603 is configured to connect with other devices via a communication network. The communication network may be an Ethernet, a radio access network, a wireless local area network (WLAN), etc.

The memory 601 may be a read-only memory (ROM) or another type of static storage device capable of storing static information and instructions, a random access memory (RAM) or another type of dynamic storage device capable of storing information and instructions, or may be an electrically erasable programmable read-only memory (EEPROM), a magnetic disk storage medium, or other magnetic storage devices, or any other medium that can be used to carry or store desired program code in the form of instructions or data structures and that can be accessed by a computer, but is not limited thereto.

As an implementation, the memory 601 may exist independently of the processor 602. The memory 601 may be connected to the processor 602 via the bus 604, and is configured to store instructions or program code. When the processor 602 revokes and executes the instructions or program code stored in the memory 601, the methods provided by the embodiments of the present disclosure can be implemented.

In another implementation, the memory 601 may also be integrated with the processor 602.

The bus 604 may be an extended industry standard architecture (EISA) bus, etc. The buses 604 may be classified into an address bus, a data bus, a control bus, etc. For ease of representation, only one thick line is used in FIG. 6, but this does not mean that there is only one bus or one type of bus.

Through the description of the above implementations, those skilled in the art may clearly understand that, for the convenience and simplicity of description, only the division of the above functional modules is used as an example for illustration. In practical applications, the above functions may be assigned to different functional modules as needed, that is, an internal structure of the device or apparatus is divided into different functional modules to complete all or a part of the functions described above.

Embodiments of the present disclosure further provide a computer-readable storage medium. All or a part of the processes in the above method embodiments may be completed by using computer instructions to instruct relevant hardware. The program may be stored in the above computer-readable storage medium. The program, upon being executed, may include the processes of the above method embodiments. The computer-readable storage medium may be a memory of any of the foregoing embodiments. The above computer-readable storage medium may also be an external storage device of the above device or apparatus, such as a plug-in hard disk, a smart media card (SMC), a secure digital (SD) card, a flash card, etc., provided on the above device or apparatus. Further, the above computer-readable storage medium may also include both the internal storage unit of the above device or apparatus and an external storage device. The above computer-readable storage medium is configured to store the above computer program and other programs and data required by the above device or apparatus. The above computer-readable storage medium may also be used to temporarily store data that has been output or is to be output. The readable storage medium includes a non-transitory computer-readable storage medium.

Embodiments of the present disclosure further provide a computer program product. The computer program product includes a computer program. The computer program product, upon being run on a computer, enables the computer to execute any one of the methods provided in the above embodiments.

Although the present disclosure has been described herein in conjunction with various embodiments, those skilled in the art, in practicing the claimed disclosure, may understand and implement other variations of the disclosed embodiments by viewing the drawings, the disclosure content, and the appended claims. In the claims, the wording "comprising/comprise/include" does not exclude other components or steps, and "a" or "an" does not exclude a possibility of multiple instances. A single processor or other unit may implement several functions enumerated in the claims. Certain measures are recited in mutually different dependent claims, but this does not indicate that these measures cannot be combined to produce a good effect.

Although the present disclosure has been described in conjunction with detailed features and embodiments thereof, obviously, various modifications and combinations may be made without departing from the spirit and scope of the present disclosure. Accordingly, the specification and drawings are merely exemplary illustrations of the present disclosure as defined by the appended claims, and are deemed to cover any and all modifications, variations, combinations, or equivalents within the scope of the present disclosure. Obviously, those skilled in the art may make various modifications and variations to the present disclosure without departing from the spirit and scope of the present disclosure. Thus, if these modifications and variations of the present disclosure fall within the scope of the claims of the present disclosure and their equivalent technology, then the present disclosure is also intended to include these modifications and variations.

The above description is merely a detailed description of the present disclosure, but the protection scope of the present disclosure is not limited thereto. Any changes or substitutions within the technical scope disclosed in the present disclosure shall be covered within the protection scope of the present disclosure. Therefore, the protection scope of the present disclosure should be subject to the protection scope of the claims.

## Claims

1. A data receiving method, wherein the method is applied to a first communication node, and comprises:
receiving a first signaling sent from a second communication node; wherein the first signaling is used to indicate a data transmission scheme; and the data transmission scheme includes a coding scheme and/or a modulation scheme; and
receiving, according to the data transmission scheme indicated by the first signaling, data sent from the second communication node.

2. The method according to claim 1, wherein the first signaling is further used to indicate at least one port of a reference signal associated with the data.

3. The method according to claim 2, wherein the first signaling being used to indicate the data transmission scheme comprises: the first signaling respectively indicates the data transmission scheme for data associated with each port.

4. The method according to claim 1, wherein the first signaling is further used to indicate a first signal, the first signal being used to provide a reference for receiving a reference signal associated with the data, and the coding scheme belongs to a first coding scheme set; wherein the first coding scheme set is determined from at least one coding scheme set based on the first signal.

5. The method according to claim 4, wherein the first signal has a same channel characteristic as the reference signal, and the channel characteristic includes at least one of: an average delay, a delay spread, a Doppler frequency, or a Doppler frequency spread.

6. The method according to claim 1, wherein the first signaling is further used to indicate a frequency band for transmitting the data; and the first signaling being used to indicate the data transmission scheme comprises: the first signaling respectively indicates a data transmission scheme for data transmitted in each frequency domain unit of the frequency band.

7. The method according to claim 1, wherein the first signaling is further used to indicate an antenna panel for transmitting the data; and the first signaling being used to indicate the data transmission scheme comprises: the first signaling respectively indicates a data transmission scheme for data transmitted by each antenna panel.

8. The method according to claim 1, wherein the first signaling is further used to indicate at least one second signal, the second signal corresponds to at least one port group of a reference signal associated with the data, and the second signal is used to provide a reference based on a common channel characteristic for a corresponding port group; and the first signaling being used to indicate the data transmission scheme comprises: the first signaling respectively indicates a data transmission scheme for data associated with a port group corresponding to each of the at least one second signal.

9. The method according to claim 1, wherein the first signaling is further used to indicate at least one transport block for transmitting the data and at least one port of a reference signal associated with data transmitted by each transport block; and the first signaling being used to indicate the data transmission scheme comprises: the first signaling respectively indicates a data transmission scheme for data transmitted by each transport block.

10. The method according to claim 9, wherein the at least one transport block includes a first transport block and a second transport block, ports of a reference signal associated with data transmitted by the first transport block are carried in a first code division multiplexing group; and ports of a reference signal associated with data transmitted by the second transport block are carried in a second code division multiplexing group.

11. The method according to claim 9, wherein the at least one transport block includes a first transport block and a second transport block, ports of a reference signal associated with data transmitted by the first transport block are carried in a first time domain unit; and ports of a reference signal associated with data transmitted by the second transport block are carried in a second time domain unit.

12. The method according to claim 9, wherein the at least one transport block includes a first transport block and a second transport block, ports of a reference signal associated with data transmitted by the first transport block are carried in a first frequency domain unit; and ports of a reference signal associated with data transmitted by the second transport block are carried in a second frequency domain unit.

13. The method according to claim 9, wherein the first signaling is further used to indicate, for each transport block, a frequency domain density of ports of a reference signal associated with data transmitted by the transport block.

14. The method according to claim 9, wherein the first signaling is further used to indicate, for each transport block, a transmission power of ports of a reference signal associated with data transmitted by the transport block.

15. The method according to claim 9, wherein the data transmission scheme for data transmitted by each transport block includes an index number of a combination of a coding scheme and a modulation scheme for the transport block; the at least one transport block includes a first transport block and a second transport block, and both an index number of a combination of a coding scheme and a modulation scheme for the first transport block and an index number of a combination of a coding scheme and a modulation scheme for the second transport block are less than a first threshold.

16. The method according to claim 2, wherein a frequency domain density of the at least one port is determined based on the data transmission scheme.

17. The method according to claim 2, wherein the data transmission scheme is determined based on a frequency domain density of the at least one port.

18. A data sending method, wherein the method is applied to a second communication node, and comprises:
sending a first signaling to a first communication node; wherein the first signaling is used to indicate a data transmission scheme; and the data transmission scheme includes a coding scheme and/or a modulation scheme; and
sending, according to the data transmission scheme indicated by the first signaling, data to the first communication node.

19. The method according to claim 18, wherein the first signaling is further used to indicate at least one port of a reference signal associated with the data.

20. The method according to claim 19, wherein the first signaling being used to indicate the data transmission scheme comprises: the first signaling respectively indicates a data transmission scheme for data associated with each port.

21. The method according to claim 18, wherein the first signaling is further used to indicate a first signal, the first signal being used to provide a reference for receiving a reference signal associated with the data, and the coding scheme belongs to a first coding scheme set; wherein the first coding scheme set is determined from at least one coding scheme set based on the first signal.

22. The method according to claim 21, wherein the first signal has a same channel characteristic as the reference signal, and the channel characteristic includes at least one of: an average delay, a delay spread, a Doppler frequency, or a Doppler frequency spread.

23. The method according to claim 21, wherein the first signaling is further used to indicate a frequency band for transmitting the data; and the first signaling being used to indicate the data transmission scheme comprises: the first signaling respectively indicates a data transmission scheme for data transmitted in each frequency domain unit of the frequency band.

24. The method according to claim 21, wherein the first signaling is further used to indicate an antenna panel for transmitting the data; and the first signaling being used to indicate the data transmission scheme comprises: the first signaling respectively indicates a data transmission scheme for data transmitted by each antenna panel.

25. The method according to claim 21, wherein the first signaling is further used to indicate at least one second signal, the second signal corresponds to at least one port group of a reference signal associated with the data, and the second signal is used to provide a reference based on a common channel characteristic for a corresponding port group; and the first signaling being used to indicate the data transmission scheme comprises: the first signaling respectively indicates a data transmission scheme for data associated with a port group corresponding to each second signal.

26. The method according to claim 21, wherein the first signaling is further used to indicate at least one transport block for transmitting the data and at least one port of a reference signal associated with data transmitted by each transport block; and the first signaling being used to indicate the data transmission scheme comprises: the first signaling respectively indicates a data transmission scheme for data transmitted by each transport block.

27. The method according to claim 26, wherein the at least one transport block includes a first transport block and a second transport block, ports of a reference signal associated with data transmitted by the first transport block are carried in a first code division multiplexing group; and ports of a reference signal associated with data transmitted by the second transport block are carried in a second code division multiplexing group.

28. The method according to claim 26, wherein the at least one transport block includes a first transport block and a second transport block, ports of a reference signal associated with data transmitted by the first transport block are carried in a first time domain unit; and ports of a reference signal associated with data transmitted by the second transport block are carried in a second time domain unit.

29. A communication apparatus, comprising: a memory and a processor; wherein the memory and the processor are coupled to each other; the memory is configured to store instructions executable by the processor; the processor, upon executing the instructions, performs the method according to any one of claims 1 to 28.

30. A computer-readable storage medium, wherein computer instructions are stored on the computer-readable storage medium, and the computer instructions, upon being executed on a communication apparatus, enable the communication apparatus to perform the method according to any one of claims 1 to 28.
